(19) Europäisches Patentamt
European Patent Office
Office européen des brevets

(11) **EP 3 875 200 A1**

(12) **EUROPEAN PATENT APPLICATION**
published in accordance with Art. 153(4) EPC

(43) Date of publication:
**08.09.2021 Bulletin 2021/36**

(51) Int Cl.:
**B23D 77/00** (2006.01)

(21) Application number: **19879971.0**

(22) Date of filing: **24.10.2019**

(86) International application number:
**PCT/JP2019/041590**

(87) International publication number:
**WO 2020/090594 (07.05.2020 Gazette 2020/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.10.2018 JP 2018206189**

(71) Applicants:
• **Ayabo Corporation**
  **Aichi**
  **4460052 (JP)**
• **National University Corporation Kagoshima University**
  **Kagoshima-shi**
  **Kagoshima 890-8580 (JP)**

• **NATIONAL UNIVERSITY CORPORATION OITA UNIVERSITY**
  **Oita-shi**
  **Oita 870-1192 (JP)**

(72) Inventors:
• **MATSUZAKI, Kenichiro**
  **Kagoshima-shi, Kagoshima 890-8580 (JP)**
• **RYU, Takahiro**
  **Oita-shi, Oita 870-1192 (JP)**
• **TSUKAMOTO, Keizo**
  **Anjo-shi, Aichi 446-0052 (JP)**

(74) Representative: **Fabry, Bernd**
  **IP2 Patentanwalts GmbH**
  **Schlossstrasse 523**
  **41238 Mönchengladbach (DE)**

(54) **HOLE PROCESSING TOOL, AND DESIGN METHOD, MANUFACTURING METHOD, AND EVALUATION METHOD FOR SAME**

(57) To provide a method for simply evaluating results of simulations based on the Matsuzaki-Ryu model.

A hole drilling tool for forming holes, including a plurality of cutting edges, wherein, when each of the cutting edges is applied to a characteristic equation of the Matsuzaki-Ryu model, an integer value closest to an imaginary part of a quasi-static characteristic root s, which is a characteristic root at a frequency $\omega = 0$, is set to $N_0$, and, when a maximum real part of the quasi-static characteristic root s which satisfies $3 \leq N_0 \leq 2n + 1$ (n is the number of the cutting edges) is a maximum real part $\sigma_{MAX}$, a maximum real part $T\sigma_{MAX}$ of the hole drilling tool is within a predetermined threshold value with respect to a maximum real part $R\sigma_{MAX}$ of a reference hole drilling tool.

FIG. 8

EP 3 875 200 A1

**Description**

**TECHNICAL FIELD**

The present invention relates to a hole drilling tool, and a design method, a manufacture method and an evaluation method for the same. This hole drilling tool is suitably used in, for example, a reaming process. Similarly, it is suitably used in general hole drilling such as end milling and drilling.

BACKGROUND ART

For example, one cause of deterioration in hole drilling accuracy in the reaming process is polygonization of drilled holes. A solution to this problem is proposed in Non Patent Literature 1.
In Non Patent Literature 1, the mechanism of occurrence of the drilled hole polygonization phenomenon in the reaming process is considered to be a self-excited vibration phenomenon due to a time delay. This literature proposes a characteristic equation based on the so-called Matsuzaki-Ryu model. Based on a characteristic root of the characteristic equation, simulations were performed on the arrangement of cutting edges that can suppress self-excited vibration in reamers (hole drilling tools).
When a demonstration test was conducted on reamers evaluated to be able to suppress self-excited vibration in such simulations, drilling with a high roundness was realized.

CITATIONS LIST

PATENT LITERATURE

Non Patent Literature 1: "Study for polygonal deformation phenomenon of borehole in reaming process", Bulletin of the Japan Society of Mechanical Engineers, Vol. 83, No. 852, 2017

SUMMARY OF INVENTION

TECHNICAL PROBLEMS

In the simulations described in Non Patent Literature 1, an alignment of angles of the cutting cutting edges of the reamer to be evaluated is substituted into the characteristic equation of the Matsuzaki-Ryu model and analyzed. Assuming that 2-sided to 13-sided polygonal holes are formed, the frequency and its characteristic root are associated with each other for each polygon and charted. Then, the obtained charts are assessed to determine whether the alignment of angles of the cutting edges to be evaluated is good or bad. See Figs. 4 and 5 as examples of the charts shown in Non Patent Literature 1.
More specifically, the maximum value (real part) of the characteristic root is observed for the charts of 2-sided to 13-sided polygons obtained as a result of the simulations. Then, it is considered that the influence of the polygons whose maximum characteristic root value exceeds zero develops during the reaming process. The larger the value of the characteristic root, the stronger the influence. Therefore, all the charts for the 2-sided to 13-sided polygons are carefully observed, and a product having an alignment of angles of the cutting edges in which each characteristic root value is zero or less or close to zero is determined as a good product.
In other words, this method is troublesome because the above-described evaluation work has to be performed individually for the alignments of angles of the cutting edges to be evaluated.

SOLUTIONS TO PROBLEMS

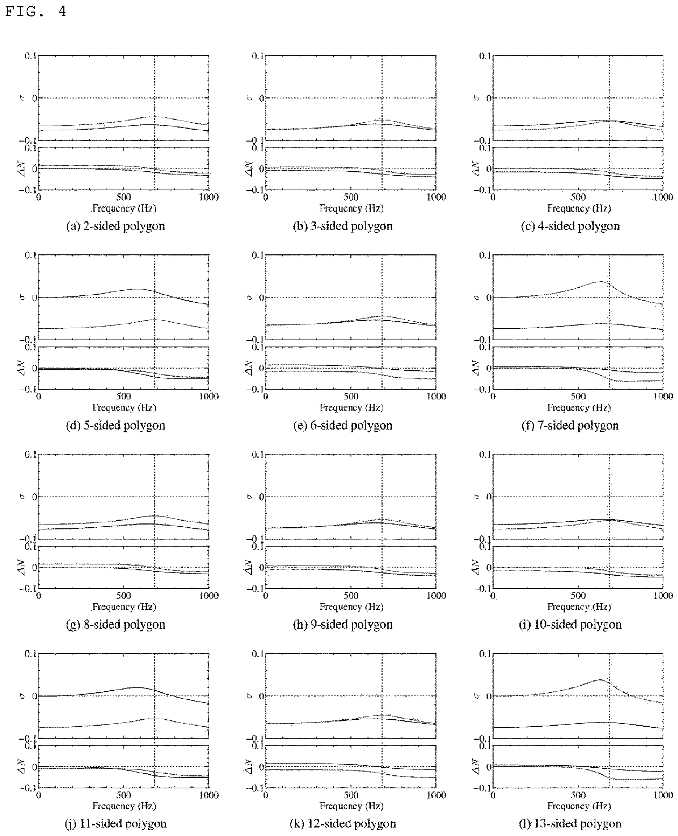

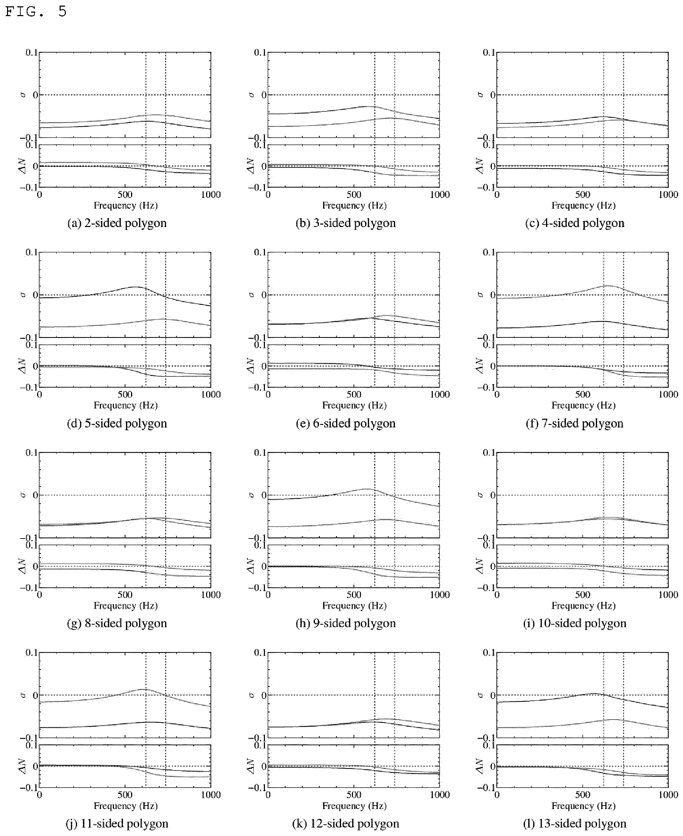

Therefore, the present inventors have studied a method for simply evaluating the results of the simulations based on the Matsuzaki-Ryu model.
As a result, the present inventors have noticed that all the curves of the charts given in Figs. 4 and 5 are gentle. Therefore, the present inventors have considered that the value when the frequency $\omega$ is set to zero (value on the vertical axis in the charts) reflects the maximum value. If the frequency $\omega$ is set to zero, the characteristic equation of the Matsuzaki-Ryu model is simplified (terms including $\omega$ can be ignored), so the calculation speed is also improved.
In this way, the characteristic root when the frequency $\omega = 0$ is named quasi-static characteristic root. The quasi-static characteristic roots are specified by calculation for all the polygons, and the maximum value among them is used to evaluate the quality of the alignment of angles of the cutting edges to be evaluated.
However, in order to determine the quality only from the numerical values obtained by the calculation (characteristic roots at the frequency $\omega = 0$), skill is required for persons who make the determination.

Moreover, it is difficult to objectively grasp the degree of the quality.

Therefore, the inventors have examined the reference for evaluating the value of the quasi-static characteristic root. As a result of the examination, the inventors have focused on a maximum value $\sigma_{MAX}$ of a real part (maximum real part) in the quasi-static characteristic root. Then, based on the maximum real part $R\sigma_{MAX}$ for the cutting edges arranged at certain angles, the inventors have compared it with a maximum real part $T\sigma_{MAX}$ for the alignment of angles of the cutting edges to be evaluated.

In particular, the inventors have found that, when a product having an alignment of angles of the evenly-spaced cutting edges is used as a reference, a strong correlation appears between the test result and the difference between the maximum real part $R\sigma_{MAX}$ of the reference product and the maximum real part $T\sigma_{MAX}$ of the product be evaluated. Here, the test result refers to roundness when an actual reaming process is performed by using a reamer having the alignment of angles of the cutting edges to be evaluated.

In the Examples, taking a reamer (six cutting edges) as an example, the maximum real part $R\sigma_{MAX}$ of the quasi-static characteristic root for the evenly-aligned cutting edges, as a reference hole drilling tool, was calculated using the characteristic equation of the Matsuzaki-Ryu model. In addition, the maximum real part $T\sigma_{MAX}$ of the quasi-static characteristic root of each of the targets to be evaluated (those having various alignments of angles of the cutting edges) was calculated in the same manner.

Then, the difference between the two maximum real parts (maximum real part $T\sigma_{MAX}$ - maximum real part $R\sigma_{MAX}$) was calculated. The difference is called QCR value (QCR: quasi-static characteristic root).

On the other hand, the reference hole drilling tool and the hole drilling tool to be evaluated were subjected to the reaming process, and the roundnesses of the obtained holes were measured.

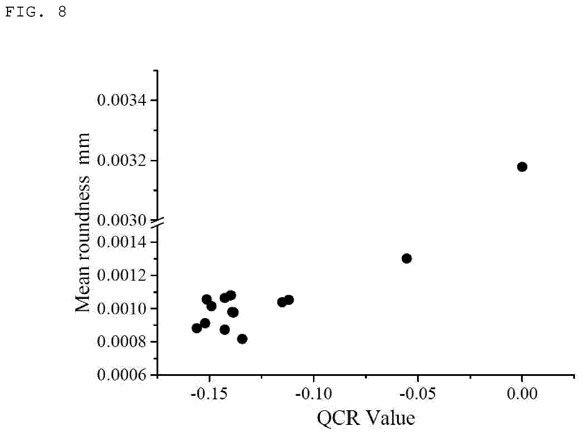

Then, the relationship between the measured roundness and the QCR value described above is shown in Fig. 8.

From the results in Fig. 8, there can be understood to be a high correlation between the QCR value and the roundness.

Based on the above findings, a first aspect of the present invention is defined as follows. Specifically, a hole drilling tool for forming holes, comprising a plurality of cutting edges, wherein when each of the cutting edges is applied to a characteristic equation of the Matsuzaki-Ryu model, an integer value closest to an imaginary part of a quasi-static characteristic root s, which is a characteristic root at a frequency $\omega = 0$, is set to $N_0$, and when a maximum real part of the quasi-static characteristic root s which satisfies $3 \le N_0 \le 2n + 1$ (n is the number of the cutting edges) is a maximum real part $\sigma_{MAX}$, a maximum real part $T\sigma_{MAX}$ of the hole drilling tool is within a predetermined threshold value with respect to a maximum real part $R\sigma_{MAX}$ of a reference hole drilling tool.

The hole drilling tool of the first aspect defined in this manner has a maximum real part $T\sigma_{MAX}$ within the predetermined threshold value with respect to the maximum real part $R\sigma_{MAX}$ of the reference hole drilling tool, and thus enables hole drilling while ensuring a high roundness, as can be seen from the relationship shown in Fig. 8.

Further, according to the hole drilling tool of the first aspect defined in this manner, the maximum real part is evaluated in comparison thereof with the reference hole drilling tool, and thus the evaluation is objective.

A second aspect of the present invention is defined as follows. Specifically, in the hole drilling tool defined in the first aspect, in the characteristic equation, the quasi-static characteristic root corresponds to 2-sided to 13-sided polygons, the reference hole drilling tool has the cutting edges arranged at equal pitches, and an absolute value of a difference between the maximum real part $T\sigma_{MAX}$ of the target hole drilling tool and the maximum real part $R\sigma_{MAX}$ of the reference hole drilling tool is 0.075 or more, provided that $T\sigma_{MAX} \le R\sigma_{MAX}$.

The hole drilling tool of the second aspect defined in this manner reflects the results in Fig. 8 more concretely, and if a hole drilling tool having such characteristics is used, a high roundness can be secured for the hole to be drilled.

The reason why the quasi-static characteristic root is limited to 13-sided polygons or below is as follows: over 13-sided polygons can be said to be close to a circle, and thus, even if this occurs, it does not have a significant effect on actual hole drilling. On the other hand, when 14-sided polygons or above are reflected, if the maximum real part of the quasi-static characteristic root obtained there becomes large, the QCR value may become large even though it has almost no effect on actual hole drilling.

A third aspect of the present invention is defined as follows. Specifically, in the hole drilling tool defined in the second aspect, an absolute value of a difference between the maximum real part $T\sigma_{MAX}$ of the target hole drilling tool and the maximum real part $R\sigma_{MAX}$ of the reference hole drilling tool is 0.10 or more.

The hole drilling tool defined in the third aspect defined in this manner reflects the results in Fig. 8 more concretely, and if a hole drilling tool having such characteristics is used, a higher roundness can be secured for the hole to be drilled.

A fourth aspect of the present invention is defined as follows. Specifically, in the hole drilling tool defined in the second aspect, an absolute value of a difference between the maximum real part $T\sigma_{MAX}$ of the target hole drilling tool and the maximum real part $R\sigma_{MAX}$ of the reference hole drilling tool is 0.125 or more.

The hole drilling tool of the fourth aspect defined in this manner furthermore reflects the results in Fig. 8, and if a hole drilling tool having such characteristics is used, a higher roundness can be secured for the hole to be drilled.

A fifth aspect of the present invention is defined as follows. Specifically, in the hole drilling tools according to the second to fourth aspects, the number n of the cutting edges is 6.

The hole drilling tool of the fifth aspect defined in this manner furthermore reflects the results in Fig. 8, and if a hole drilling tool having such characteristics is used, a higher roundness can be secured for the hole to be drilled.

A sixth aspect of the present invention is defined as follows. Specifically, in the drilling tools defined in the second to fifth aspects, a magnitude relationship of a division angle $\alpha i$ between the cutting edge i and the cutting edge i + 1 adjacent to it in an opposite rotating direction when viewed over the entire circumference of the hole drilling tool, and a magnitude relationship when a margin width tmi + 1 and/or land width ti + 1 of the cutting edge i + 1 is viewed in the entire circumferential direction of the hole drilling tool coincide with each other.

According to the hole drilling tool defined in the sixth aspect defined in this manner, the width (margin width, land width) of a portion of the cutting edge which is in contact with a workpiece is changed. The change corresponds to the magnitude of the angle (division angle) between the adjacent cutting edges. That is, the larger the division angle, the greater the load on the portion of the cutting edge on the downstream side in the rotating direction, which is in contact with the workpiece. Therefore, the wear of the portion is likely to progress. Therefore, as the division angle increases, the width of the cutting edge portion in contact with the workpiece is increased accordingly, to suppress the progress of wear and thus prevent uneven distribution of wear.

A seventh aspect of the present invention is defined as follows. Specifically, in the drilling tool defined in the sixth aspect, a ratio ($\alpha 1:\alpha 2:......:\alpha n$) between the division angles $\alpha i$ when the division angles are viewed over the entire circumference of the hole drilling tool, and a ratio (tm2:tm3:......: tmn:tm1) between the margin width when the margin widths are viewed over the entire circumference of the hole drilling tool or a ratio (t2:t3:......: tn:t1) between the land widths when the land widths are viewed over the entire circumference of the hole drilling tool coincide with each other.

According to the hole drilling tool of the seventh aspect defined in this manner, the division angle is proportional to the width (margin width, land width) of the cutting edge portion in contact with the workpiece, and thus uneven distribution of wear is further reduced.

An eighth aspect of the present invention is defined as follows. Specifically, in the drilling tool according to the sixth or seventh aspect, a margin portion of each of the cutting edges is covered with a hard fil.

According to the hole drilling tool of the eighth aspect defined in this manner, it is possible to prevent uneven distribution of wear while reducing the use of the material for the hard film. The hole drilling tool described above is suitably used in the reaming process (ninth aspect).

BRIEF DESCRIPTION OF DRAWINGS

Fig. 1 is a drawing-substitute photograph showing a reamer which is an example of a hole drilling tool of the present invention.

Fig. 2 is a schematic diagram showing basic parameters of the Matsuzaki-Ryu model which is applied to a hole drilling tool with six cutting edges.

Fig. 3 is a schematic diagram showing the analysis principle of the Matsuzaki-Ryu model.

Fig. 4 shows analysis results of a hole drilling tool equipped with evenly-spaced cutting edges, and the horizontal axis of each chart represents the frequency and the vertical axis thereof represents the characteristic root.

Fig. 5 shows analysis results of a hole drilling tool equipped with differently-spaced cutting edges, and the horizontal axis of each chart represents the frequency and the vertical axis thereof represents the characteristic root.

Fig. 6 shows a relationship between the rotating speed and the roundness obtained by performing hole drilling with hole drilling tools of Comparative Examples 1 and 2 and Examples 1 to 6 of the present invention.

Fig. 7 shows a relationship between the rotating speed and the roundness obtained by performing hole drilling with hole drilling tools of Examples 7 to 12 of the present invention.

Fig. 8 is a graph showing a relationship between QCR value and mean roundness in the Examples and the Comparative Examples.

Fig. 9 is a conceptual diagram showing a division angle of each of cutting edges of a hole drilling tool.

Fig. 10 is an explanatory diagram of mechanical terms for the hole drilling tool.

Fig. 11 shows a relationship between a maximum real part $\sigma_{MAX}$ of the quasi-static characteristic root and the mean roundness.

Fig. 12 shows a relationship between a characteristic root real part and the rotating speed for Comparative Examples 1 and 2, and Examples 1 and 2.

Fig. 13 shows a relationship between a maximum characteristic root real part and a polygonal number.

DESCRIPTION OF EMBODIMENT

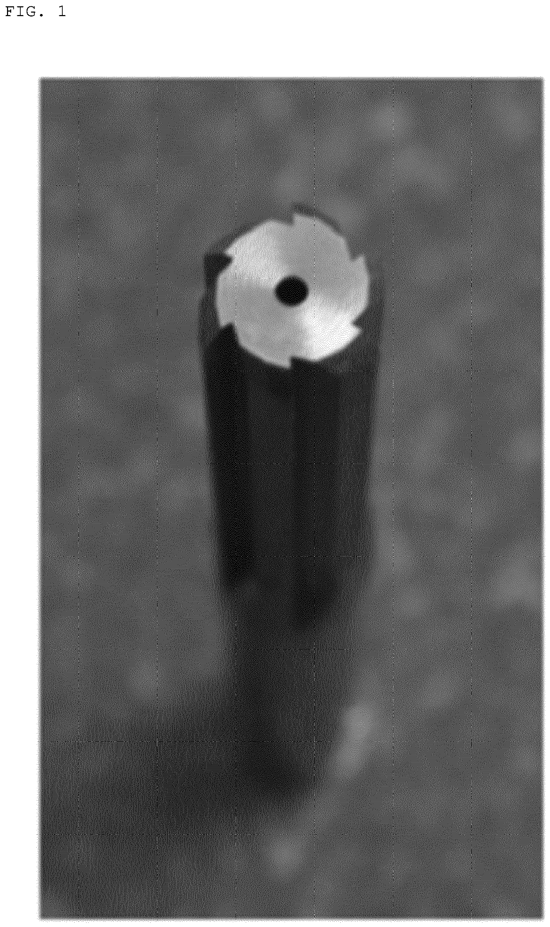

First, the Matsuzaki-Ryu model will be described. Fig. 1 is a drawing-substitute photograph showing a hole drilling tool (reamer) used in a reaming process.
In a general reaming process, a workpiece is fixed and the process is performed by rotating the reamer. For the purpose of clarifying the basic characteristics, the case of simpler tool fixation/workpiece rotation is taken as an analysis model. It is assumed that the workpiece has a pilot hole, and the center of the pilot hole and the axial center of the reamer coincide with each other in a normal cutting state in which the process is performed without the tool vibrating.

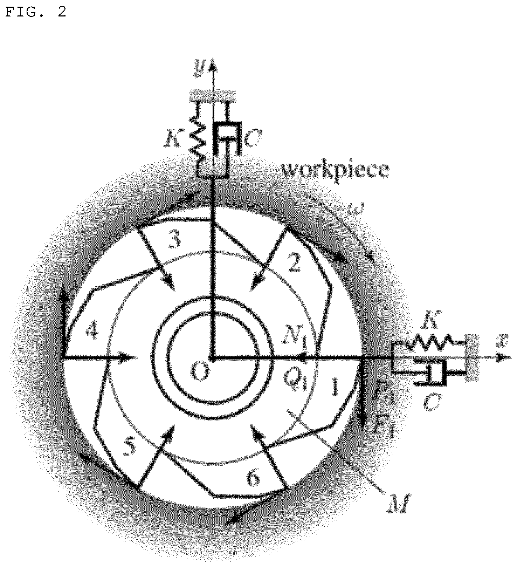

Fig. 2 shows an analysis model for the reaming process, when six cutting edges are provided. The figure shows the reamer when viewed from the front of the cutting edges. The reamer does not rotate, and the workpiece rotates clockwise at an angular velocity $\omega$. Assuming that the reamer and spindle move in unison, only in-plane translational motion is considered, and rotational motion and bending and twisting of the reamer are ignored. Also, for simplicity, it is assumed that the reamer and spindle are isotropically supported by springs and dashpots.
The coordinate system 0-xy fixed in the space with the center of the pilot hole as the origin is taken, and the coordinates of the central axis of the reamer are defined as (x, y). The number of cutting edges in the reamer is defined as n, and one of the cutting edges is arranged in the forward direction of the x-axis. Starting from this cutting edge, the cutting edges are numbered as i (i = 1, 2,......, n) in the direction opposite to the rotating direction of the workpiece, and the angle of the cutting edge i with the x-axis is defined as $\alpha_i$. It should be noted that $\alpha_i$ = 0 rad. It is considered that the cutting force and contact force act on each of the cutting edges. It is assumed that the cutting is performed only at the axial tip of the reamer, and the principal force and thrust force of the cutting force act on the cutting portion. In addition, the normal force and frictional force due to contact with the drilled hole are taken into consideration, in portions other than the axial tip of the cutting edge.

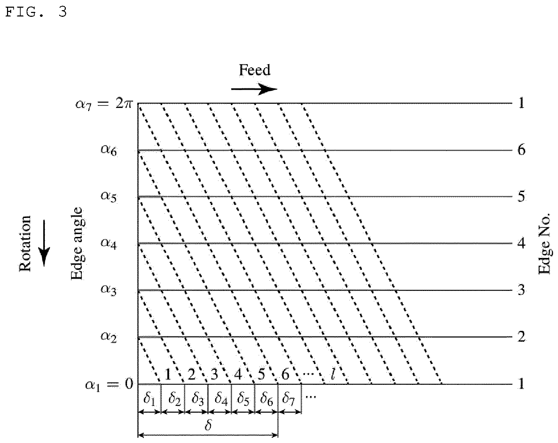

Fig. 3 shows a relationship between the cutting edge and the drilled hole in the reaming process when six cutting edges are provided. In this figure, the surface of the drilled hole is developed, and the horizontal axis represents the position in the axial direction and the vertical axis represents the angle in the circumferential direction. In this figure, the cutting edge is indicated by a solid horizontal line, the left end of which represents the axial tip. The workpiece is fed while rotating with respect to the cutting edge, but, in the figure, the workpiece moves in the lower right direction along a diagonal direction shown by a dotted line, because the rotation is expressed by the vertical downward movement and the feed is expressed by the horizontal right movement. Therefore, cutting is performed at the most tip portion in the axial direction of the cutting edge indicated by a red line, and, in the subsequent portions, the cutting edge is in contact with the portion cut by the previous cutting edge in order from the immediately preceding cutting edge.

Since cutting is performed on all the cutting edges at the same time, the axial length of a portion cut by one cutting edge corresponds to the length of the feed until the portion cut by the immediately preceding cutting edge reaches, as shown in Fig. 3. Therefore, assuming that the feed per rotation of the workpiece is $\delta$, the axial length $\delta_i$ of the portion cut by the cutting edge i is as follows.

[Mathematical Formula 1]

$$\delta_i = \frac{\alpha_{i+1} - \alpha_i}{2\pi}\delta, \quad \delta = \sum_{i=1}^{n} \delta_i$$

Here, $\delta$ is equal to the sum of the axial lengths cut by all the cutting edges. If the subscript j of $\alpha$ and $\delta$ exceeds n (j> n), $\alpha_j$ and $\delta_j$ are defined by the following equations.

[Mathematical Formula 2]

$$\left.\begin{array}{l} \alpha_j = \alpha_{j-n} + 2\pi \\ \delta_j = \delta_{j-n} \end{array}\right\}$$

Here, in order to examine the growth of micro-vibration of the reamer, assuming that the displacements x and y of the reamer are sufficiently smaller than the radius of the reamer, radial displacement ri of the cutting edge i is approximately expressed as follows.

[Mathematical Formula 3]

$$r_i(t) = x(t)\cos\alpha_i + y(t)\sin\alpha_i$$

Assuming that fluctuation $P_i$ in principal force and fluctuation Qi in thrust force of the cutting edge i, based on the forces in the normal cutting state in which the process is performed without the center of the reamer moving from the origin, are proportional to the quantity of fluctuation in area of the portion cut by the cutting edge i, the following equations are established.

[Mathematical Formula 4]

$$P_i(t) = K_c\delta_i r_i(t) \Big\}$$
$$Q_i(t) = bP_i(t) \quad \Big\}$$

Here, $K_c$ represents the specific cutting resistance, and b represents the ratio of the thrust force to the principal force.

Next, the contact force is considered. It is assumed that the fluctuation in normal force based on the force in the normal cutting state can be modeled by the distributed springs and distributed dashpots between the cutting edge and the workpiece surface. The frictional force is assumed to be the Coulomb frictional force. As shown in Fig. 3, when the numbers 1 = 1, 2,... are added to the contact portion in order from the tip of the contact portion, the first contact portion of the cutting edge i is a portion cut to the time t - ($\alpha_{i+1}$ - $\alpha_i$)/ω by the cutting edge i + 1, and its axial length is $\delta_{i+1}$. The magnitude of the fluctuation in contact force of each portion is proportional to the difference in amount of deformation of the hole surface in contact with the radial displacement of the cutting edge and its time change, which is equal to the radial displacement of the cutting edge that performed cutting at the time of the cutting. Therefore, fluctuation $N_{i,j}$ in normal force and fluctuation $F_{i,j}$ in frictional force at the first contact portion of the cutting edge i are expressed by the following equations.

[Mathematical Formula 5]

$$N_{i,l}(t) = k\delta_{i+l}\left[r_i(t) - r_{i+l}\left(t - \frac{\alpha_{i+l} - \alpha_i}{\omega}\right)\right] + c\delta_{i+l}\left[\dot{r}_i(t) - \dot{r}_{i+l}\left(t - \frac{\alpha_{i+l} - \alpha_i}{\omega}\right)\right]\Bigg\}$$
$$F_{i,l}(t) = \mu N_{i,l}(t)$$

Here, k and c are the spring constant and the viscous damping coefficient per unit length between the cutting edge and the surface of the workpiece, and μ is the dynamic friction coefficient.

Assuming that the axial contact length between the cutting edge and the drilled hole is δ m, which corresponds to the feed for m rotations, the cutting edge is brought into contact with the drilled hole in the range of 1 = 1,..., n × m. At this time, the sum $N_i$ of the fluctuations in normal force acting on the cutting edge i and the sum Fi of the fluctuation in frictional force are expressed by the following equations.

[Mathematical Formula 6]

$$N_i(t) = \sum_{l=1}^{nm} N_{i,l}(t)$$

$$F_i(t) = \sum_{l=1}^{nm} F_{i,l}(t) = \mu N_i(t)$$

Assuming that the equivalent masses of the reamer and the spindle are M, and the equivalent spring constants in the x and y directions and the equivalent viscous damping coefficients are K and C, respectively, the equations of motion of the reamer and the spindle are as follows.

[Mathematical Formula 7]

$$M\ddot{x}(t) + C\dot{x}(t) + Kx(t) = F_x(t)$$

$$M\ddot{y}(t) + C\dot{y}(t) + Ky(t) = F_y(t)$$

Here, $F_x$ and $F_y$ are the x- and y-direction components of the fluctuation in forces acting on the cutting edge (principal force, thrust force, normal force and frictional force) and are expressed as follows.

[Mathematical Formula 8]

$$F_x(t) = \sum_{i=1}^{n} \left\{ \left[ P_i(t) + \mu N_i(t) \right] \sin \alpha_i - \left[ bP_i(t) + N_i(t) \right] \cos \alpha_i \right\}$$

$$F_y(t) = \sum_{i=1}^{n} \left\{ -\left[ P_i(t) + \mu N_i(t) \right] \cos \alpha_i - \left[ bP_i(t) + N_i(t) \right] \sin \alpha_i \right\}$$

The solutions of the equations shown in Mathematical Formula 7 are assumed as follows.

[Mathematical Formula 9]

$$x(t) = \tilde{X} e^{\omega st}, \quad y(t) = \tilde{Y} e^{\omega st}$$

Here, s represents a characteristic index made dimensionless by the rotational angular velocity $\omega$. When the solutions shown in Mathematical Formula 9 are substituted into the equations shown in Mathematical Formula 7 and the equations show in Mathematical Formulas 3 to 6 and 8 are considered, the following equations are obtained.

[Mathematical Formula 10]

$$\left. \begin{array}{l} \left( M\omega^2 s^2 + C\omega s + K \right) \tilde{X} = \tilde{F}_x(s) \\ \left( M\omega^2 s^2 + C\omega s + K \right) \tilde{Y} = \tilde{F}_y(s) \end{array} \right\}$$

[Mathematical Formula 11]

$$\left. \begin{array}{l} \tilde{F}_x(s) = \sum_{i=1}^{n} \left\{ \left[ \tilde{P}_i + \mu \tilde{N}_i(s) \right] \sin \alpha_i - \left[ b\tilde{P}_i + \tilde{N}_i(s) \right] \cos \alpha_i \right\} \\ \tilde{F}_y(s) = \sum_{i=1}^{n} \left\{ -\left[ \tilde{P}_i + \mu \tilde{N}_i(s) \right] \cos \alpha_i - \left[ b\tilde{P}_i + \tilde{N}_i(s) \right] \sin \alpha_i \right\} \end{array} \right\}$$

[Mathematical Formula 12]

$$\tilde{P}_i = K_c \delta_i \left( \tilde{X} \cos \alpha_i + \tilde{Y} \sin \alpha_i \right)$$

[Mathematical Formula 13]

$$\tilde{N}_i(s) = (k + c\omega s) \left\{ \left[ m\delta \cos \alpha_i - D_i^c(s) \right] \tilde{X} + \left[ m\delta \sin \alpha_i - D_i^s(s) \right] \tilde{Y} \right\}$$

[Mathematical Formula 14]

$$\left. \begin{array}{l} D_i^c(s) = \sum_{l=1}^{nm} \delta_{i+l} e^{-(\alpha_{i+l} - \alpha_i)s} \cos \alpha_{i+l} = \dfrac{1 - e^{-2\pi ms}}{1 - e^{-2\pi s}} \sum_{p=1}^{n} \delta_{i+p} e^{-(\alpha_{i+p} - \alpha_i)s} \cos \alpha_{i+p} \\ D_i^s(s) = \sum_{l=1}^{nm} \delta_{i+l} e^{-(\alpha_{i+l} - \alpha_i)s} \sin \alpha_{i+l} = \dfrac{1 - e^{-2\pi ms}}{1 - e^{-2\pi s}} \sum_{p=1}^{n} \delta_{i+p} e^{-(\alpha_{i+p} - \alpha_i)s} \sin \alpha_{i+p} \end{array} \right\}$$

The following characteristic equations are obtained from the equations shown in Mathematical Formula (10)

[Mathematical Formula 15]

$$\left| \begin{array}{cc} M\omega^2 s^2 + C\omega s + K + \gamma_{xx}(s) & \gamma_{xy}(s) \\ \gamma_{yx}(s) & M\omega^2 s^2 + C\omega s + K + \gamma_{yy}(s) \end{array} \right| = 0$$

[Mathematical Formula 16]

$$\gamma_{xx}(s) = -\sum_{i=1}^{n}\left[ K_c\delta_i\cos\alpha_i\left(\sin\alpha_i - b\cos\alpha_i\right) + (k+c\omega s)\left(m\delta\cos\alpha_i - D_i^c\right)\left(\mu\sin\alpha_i - \cos\alpha_i\right)\right]$$

$$\gamma_{xy}(s) = -\sum_{i=1}^{n}\left[ K_c\delta_i\sin\alpha_i\left(\sin\alpha_i - b\cos\alpha_i\right) + (k+c\omega s)\left(m\delta\sin\alpha_i - D_i^s\right)\left(\mu\sin\alpha_i - \cos\alpha_i\right)\right]$$

$$\gamma_{yx}(s) = \sum_{i=1}^{n}\left[ K_c\delta_i\cos\alpha_i\left(\cos\alpha_i + b\sin\alpha_i\right) + (k+c\omega s)\left(m\delta\cos\alpha_i - D_i^c\right)\left(\mu\cos\alpha_i + \sin\alpha_i\right)\right]$$

$$\gamma_{yy}(s) = \sum_{i=1}^{n}\left[ K_c\delta_i\sin\alpha_i\left(\cos\alpha_i + b\sin\alpha_i\right) + (k+c\omega s)\left(m\delta\sin\alpha_i - D_i^s\right)\left(\mu\cos\alpha_i + \sin\alpha_i\right)\right]$$

The results of analyzing the equation of motion of such a model are shown as charts in Fig. 4 (equally divided cutting edge) and charts in Fig. 5 (differently divided cutting edge).

Since the quasi-static characteristic root having a frequency $\omega = 0$ is used in the present invention, the characteristic equation of the Matsuzaki-Ryu model can be summarized as follows.

[Mathematical Formula 17]

$$\begin{vmatrix} 1+\hat{g}_{xx}(s) & \hat{g}_{xy}(s) \\ \hat{g}_{yx}(s) & 1+\hat{g}_{yy}(s) \end{vmatrix} = 0$$

$$\hat{g}_{xx}(s) = -\sum_{i=1}^{n}\left[\frac{K_c d}{K}\hat{d}_j\cos a_j\left(\sin a_j - b\cos a_j\right) + \frac{kd}{K}\left(m\cos a_j - \hat{D}_j^c\right)\left(m\sin a_j - \cos a_j\right)\right]$$

$$\hat{g}_{xy}(s) = -\sum_{i=1}^{n}\left[\frac{K_c d}{K}\hat{d}_j\sin a_j\left(\sin a_j - b\cos a_j\right) + \frac{kd}{K}\left(m\sin a_j - \hat{D}_j^s\right)\left(m\sin a_j - \cos a_j\right)\right]$$

$$\hat{g}_{yx}(s) = \sum_{i=1}^{n}\left[\frac{K_c d}{K}\hat{d}_j\cos a_j\left(\cos a_j + b\sin a_j\right) + \frac{kd}{K}\left(m\cos a_j - \hat{D}_j^c\right)\left(m\cos a_j + \sin a_j\right)\right]$$

$$\hat{g}_{yy}(s) = \sum_{i=1}^{n}\left[\frac{K_c d}{K}\hat{d}_j\sin a_j\left(\cos a_j + b\sin a_j\right) + \frac{kd}{K}\left(m\sin a_j - \hat{D}_j^s\right)\left(m\cos a_j + \sin a_j\right)\right]$$

$$\hat{D}_i^c(s) = \frac{1-e^{-2pms}}{1-e^{-2ps}}\sum_{p=1}^{n}\hat{d}_{i+p}e^{-(a_{i+p}-a_i)s}\cos a_{i+p}$$

$$\hat{D}_i^s(s) = \frac{1-e^{-2pms}}{1-e^{-2ps}}\sum_{p=1}^{n}\hat{d}_{i+p}e^{-(a_{i+p}-a_i)s}\sin a_{i+p}$$

$$\hat{d}_j = \frac{d_j}{d} = \frac{a_{j+1}-a_j}{2p}$$

The parameters (excluding the cutting edge arrangement angle ($\alpha_j$)) used in analyzing such an equation of motion are as follows.

Kcd/K =1.0
kd/K =1.0
b=0.01
m=0.10
m =1

Here, m is an integer value, and the other symbols are dimensionless quantities.

Table 1 shows results of analysis of the above equation of motion for each of the Examples and Comparative Examples shown.

[Table 1]

| Example/ Comparative Example | Name | Angle arrangement | Maximum characteristic root | Quasi-static characteristic root | QCR value | Mean roundness | Polygonal number in which quasi-static characteristic root real part is maximum |
|---|---|---|---|---|---|---|---|
| Comparative Example 1 | Equal pitch | 60,60,60,60,60,60 | 3.74E-02 | -8.30E-02 | 0.00E+00 | 3.18E-03 | For example, 5 |
| Comparative Example 2 | Old 15 | 45,60,75,45,60,75 | 2.07E-02 | -1.38E-01 | -5.54E-02 | 1.30E-03 | 7 |
| Example 1 | 36° | 66,36,78,87,44,49 | -2.32E-04 | -2.35E-01 | -1.52E-01 | 9.12E-04 | 9 |
| Example 2 | New 15 | 75,45,60,45,60,75 | 3.10E-03 | -2.39E-01 | -1.56E-01 | 8.82E-04 | 9 |
| Example 3 | 90° | 45,45,90,55,55,70 | 6.31E-04 | -2.22E-01 | -1.39E-01 | 9.80E-04 | 7 |
| Example 4 | Oita University | 75,60,56,60,45,75 | 4.72E-03 | -2.23E-01 | -1.40E-01 | 1.08E-03 | 9 |
| Example 5 | 36 +5° (1) | 61,41,78,87,44,49 | 1.84E-03 | -2.26E-01 | -1.43E-01 | 8.73E-04 | 8 |
| Example 6 | 36 +5° (2) | 61,41,78,87,44,49 | 1.84E-03 | -2.26E-01 | -1.43E-01 | 1.06E-03 | Same as above |
| Example 7 | N=3-18, min30 rank 4 | 30,100,50,50,40,90 | 7.21E-03 | -2.32E-01 | -1.49E-01 | 1.02E-03 | 9 |
| Example 8 | N=3-36, min30 rank 3 | 35,40,105,50,55,75 | 1.29E-02 | -1.98E-01 | -1.15E-01 | 1.04E-03 | 8 |
| Example 9 | N=3-36, min30 rank 2 | 35,95,50,60,30,90 | 1.42E-02 | -1.95E-01 | -1.12E-01 | 1.05E-03 | 13 |
| Example 10 | N=3-36, min30 rank 1 | 40,80,60,55,35,90 | 8.45E-03 | -2.17E-01 | -1.34E-01 | 8.17E-04 | 11 |
| Example 11 | N=3-18, min30 rank 1 | 50,30,100,70,70,40 | 5.00E-03 | -2.34E-01 | -1.51E-01 | 1.06E-03 | 10 |

(continued)

| Example/ Comparat ive Example | Name | Angle arrange ment | Maximu m characterist ic root | Quasi-static charac terist ic root | QCR val ue | Mea n rou ndn ess | Polygo nal number in which quasi-static charac terist ic root real part is maximu m |
|---|---|---|---|---|---|---|---|
| Example 12 | N=3-18,m in30 rank 5 | 70,40,7 0,30,10 0,50 | 9.44E-03 | -2.22E-01 | -1.3 9E- 01 | 9.7 7E- 04 | 11 |
| * Mean roundness is mean roundness for the latter half of drilled holes (data with large errors is deleted). | | | | | | | |

In Table 1, the maximum characteristic root shows the maximum value of the characteristic root (real part) at all the frequencies and in the 2-sided to 13-sided polygons. To obtain this value, it is necessary to calculate the amount of data required to draw a large number of charts as shown in Figs. 4 and 5.

On the other hand, the maximum real part $\sigma_{MAX}$ of the quasi-static characteristic root refers to the maximum real part of the quasi-static characteristic root s which satisfies $3 \leq No \leq 13$, when an integer value closest to an imaginary part of a quasi-static characteristic root s, which is a characteristic root at a frequency $\omega = 0$, is set to $N_0$.

The maximum real part $\sigma_{MAX}$ of the quasi-static characteristic root s can be calculated only when the frequency $\omega = 0$ (the value on the vertical axis of each chart). Further, since the equation of motion is simplified at the frequency $\omega = 0$, the load on the calculation is greatly reduced. Therefore, it is possible to evaluate many objects under the same load on the computer.

The QCR value shows the difference between the maximum real part $R\sigma_{MAX}$ of the quasi-static characteristic root of Comparative Example 1 (equally divided cutting edge) and the maximum real part $T\sigma_{MAX}$ of the quasi-static characteristic root of each of the other Examples and Comparative Examples.

Each of the Examples and Comparative Examples was subjected to a reaming process test so as to meet the analysis conditions. The basic test conditions were as follows (adjusted according to the material and the type of reamer device).

Reamer

Groove bottom diameter: $\varphi$5.2 mm
Groove depth: 1.4 mm
Radius of groove roundness: R 0.05 to R 0.3 mm
Land width: Depending on division angle
Margin width: 0.5 mm
Material: Cemented carbide
Hard film material: Nitride such as TiN, TiAlN, TiSiN, or AlCrN
Covered with hard film: Entire circumference of the reamer

Workpiece

Material: FC250 (gray cast iron product)
Outer diameter: $\varphi$8 (outer diameter of reamer = 7.98)
Pilot hole diameter: $\varphi$7.5 (outer diameter of pilot hole drill)
Length: Pilot hole depth: 26, reaming process depth: 24

Drilling conditions

Rotating speed: 2000 to 6000 rpm
Traveling speed: Feed rate: 200 to 600 mm/min; cutting speed (peripheral speed at $\varphi$8) : 50 to 15 m/min
Cutting oil: Soluble type water-soluble cutting oil

Inner diameter measurement conditions

Measuring instrument: Talyrond 365 manufactured by TAYLOR HOBSON
Measurement position: A place 0.5 to 1 mm away from the surface of a hole with a reaming process depth of 24 mm is defined as first surface, and the roundnesses of a total of 12 surfaces are measured at a pitch of 2 mm in the depth direction.

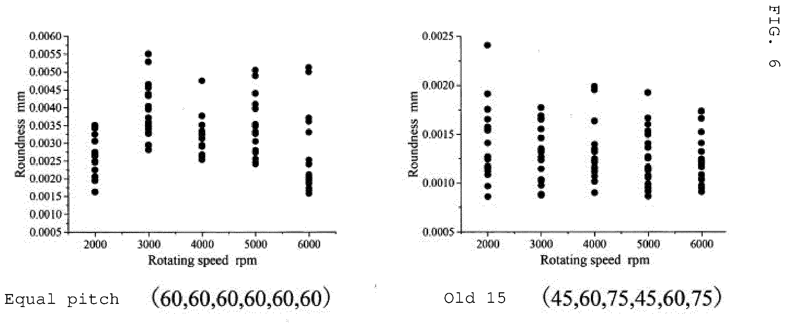

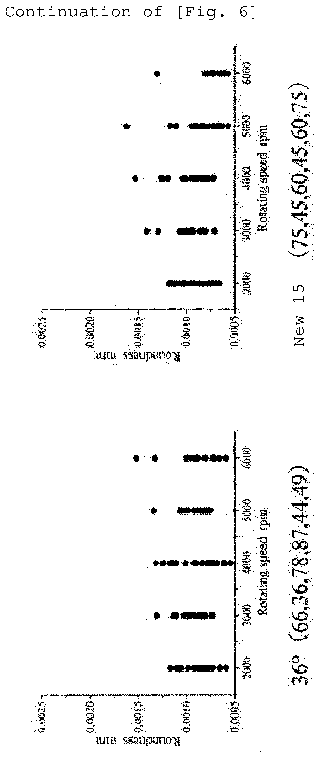

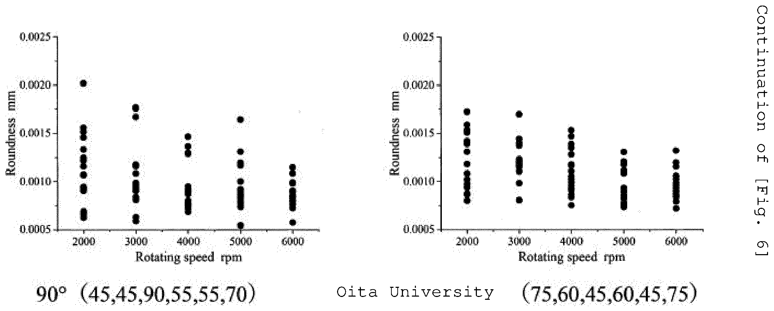

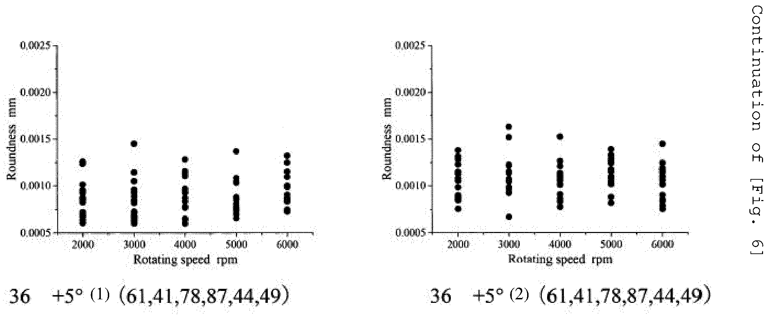

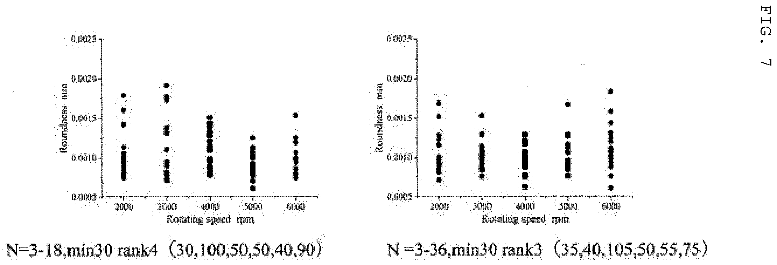

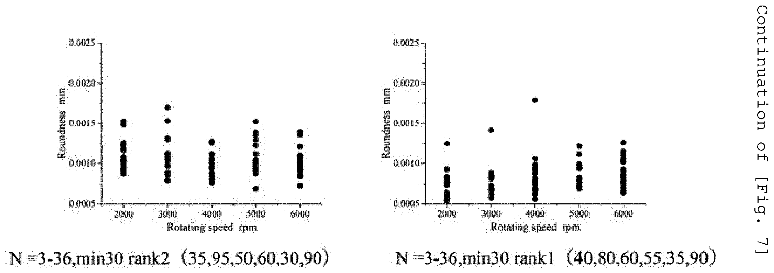

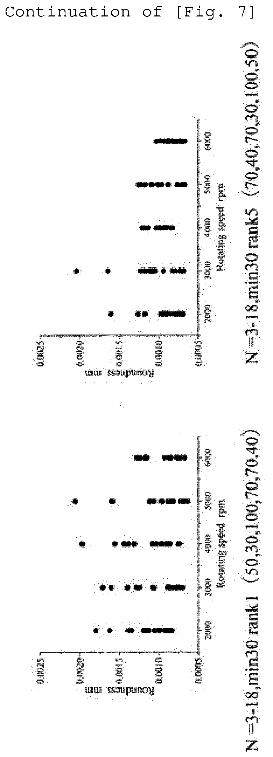

The test results of the Examples and Comparative Examples are shown in Figs. 6 and 7.

The vertical axis of each chart of Figs. 6 and 7 represents the roundness, and the horizontal axis represents the rotating speed of the reamer.

The mean roundness in Table 1 shows the mean roundness of each chart in Figs. 6 and 7. In addition, a roundness that deviates extremely is excluded at the time of calculating the mean value. This is to eliminate an error due to the drive unit of the reamer device.

Fig. 8 shows a relationship between the QCR value and the mean roundness in Table 1. In Table 1, the two data on the right side show the Comparative Examples, and the other data show the Examples.

From Fig. 8, it can be seen that the mean roundness increases when the absolute value of the QCR value is 0.075 or more. Furthermore, the absolute value is preferably 0.10 or more. More preferably, the absolute value is 0.125 or more.

In addition to the reamers of Comparative Examples 1 and 2 listed in Table 1, various reamers have been conventionally proposed and sold. Some of them may accidentally have a QCR value exceeding each of the above thresholds. However, in evaluating the performance of the reamer, the QCR value proposed in the present specification is a completely novel concept by the present inventors, and such an accidental conventional reamer does not disclose the concept at all. Therefore, even if such a reamer exists before the filing of the present application, it is considered that the present invention does not lose its novelty. If such a reamer existed before the application of the present application, it shall be excluded from the claims directed to the hole drilling tool.

From Table 1, the reamer with the cutting edges shown arranged in the alignment of angles as shown in each of the Examples shows excellent characteristics (roundness). It is considered that the equivalent performance, that is, reproducibility of roundness, can be obtained even if each of the cutting edges is changed by ± 3 degrees in the alignment of angles of the cutting edges of each embodiment.

In particular, the reamers having the alignments of angles of the cutting edges shown in Examples 10 and 11 show excellent characteristics (roundness). It is considered that the same performance, that is, the reproducibility of roundness, can be obtained even if each of the cutting edges is changed by ± 3 degrees in such an alignment of angles of the cutting edges.

Therefore, other aspects of the invention can be defined as follows. Specifically, a reamer with six cutting edges, wherein arrangement angles of the cutting edges are 35 to 45 degrees, 75 to 85 degrees, 55 to 65 degrees, 50 to 60 degrees, 30 to 40 degrees, and 85 to 95 degrees in order. Furthermore, a reamer wherein arrangement angles of the cutting edges are 45 to 55 degrees, 25 to 35 degrees, 95 to 105 degrees, 65 to 75 degrees, 65 to 75 degrees, and 35 to 45 degrees, respectively.

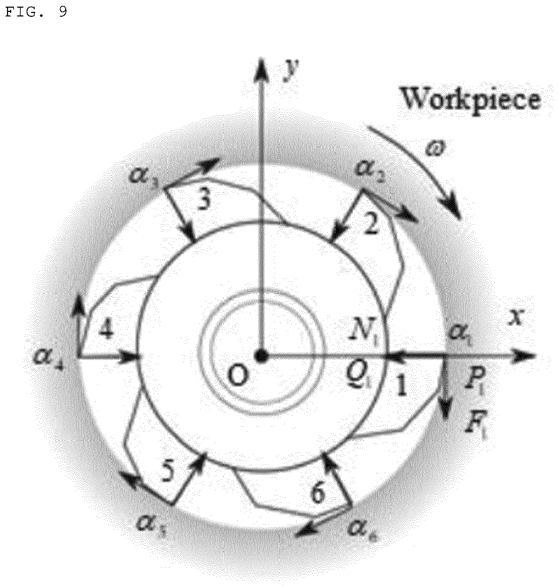

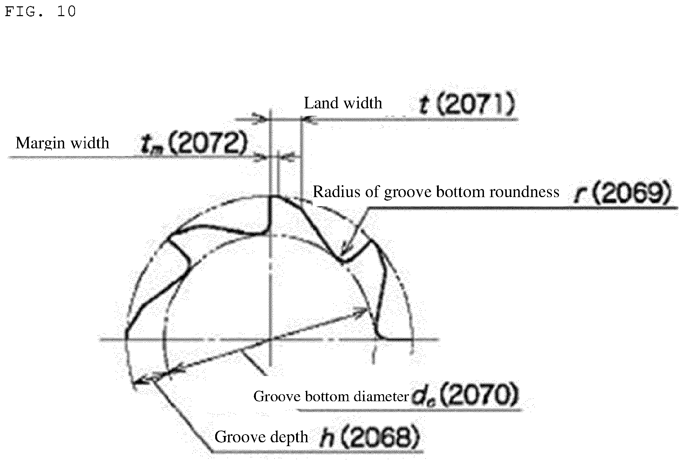

Fig. 9 schematically shows the disassembly angle of each of the cutting edges in the reamer. Fig. 10 schematically shows the cutting edge shape of the reamer.

When machining with a reamer, the larger the division angle, the larger the load is applied to the cutting edge on the rear side in the rotating direction. This load accelerates the wear of the cutting edge. Here, if the progress of wear varies in the respective cutting edges constituting the reamer, it hinders the maintenance of a high roundness and lowers the durability.

Therefore, in order to prevent the occurrence of variation in wear of each of the cutting edges and to secure the rigidity of each of the cutting edges, it is preferable to adjust the width of the cutting edge portion in contact with the workpiece (width of the land portion (land width) or margin portion (margin width)) according to the cutting edge spacing (division angle).

More specifically, a magnitude relationship when a division angle $\alpha i$ between the cutting edge i and the cutting edge i + 1 adjacent to it in an opposite rotation direction is viewed over the entire circumference of the hole drilling tool, and a magnitude relationship of a margin width $tmi + 1$ or land width $ti + 1$ of the cutting edge i + 1 when viewed in the entire circumferential direction of the hole drilling tool are caused to coincide with each other.

Further, a ratio ($\alpha 1 : \alpha 2 : ...... : \alpha n$) between the division angles $\alpha i$ when the division angles are viewed over the entire circumference of the hole drilling tool, and a ratio ($tm2 : tm3 : ...... : tmn : tm1$) between the margin width when the margin widths are viewed over the entire circumference of the hole drilling tool or a ratio ($t2 : t3 : ...... : tn : t1$) between the land widths when the land widths are viewed over the entire circumference of the hole drilling tool are caused to coincide with each other.

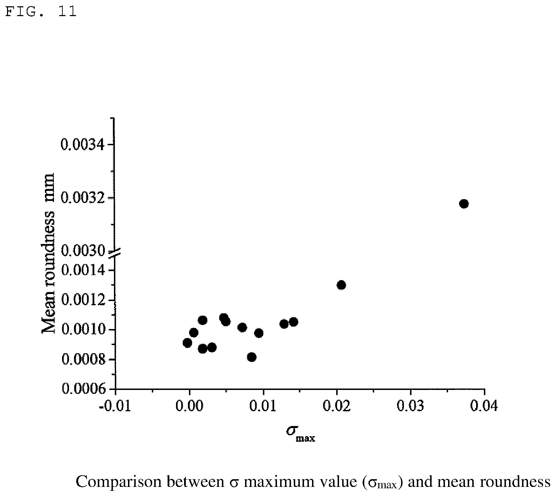

The results of other experiments by the present inventors are shown in Figs. 11 to 13.

Fig. 11 shows the relationship between the maximum real part $\sigma_{MAX}$ of the quasi-static characteristic root and the mean roundness. From this figure, it can be seen that the maximum real part $\sigma_{MAX}$ of the quasi-static characteristic root can also be an index showing the characteristics of the drilling tool.

Here, when compared with Fig. 8, it can be seen that the QCR value more clearly shows its characteristics.

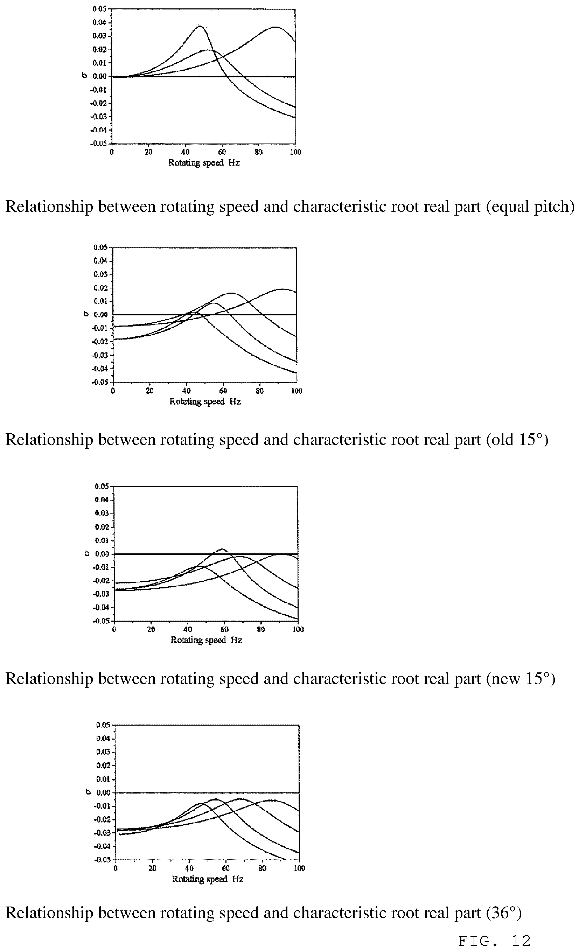

Note that Fig. 12 shows the relationship between the characteristic root real part of the characteristic equation of the Matsuzaki-Ryu model and the rotating speed for Comparative Examples 1 and 2 and Examples 1 and 2.

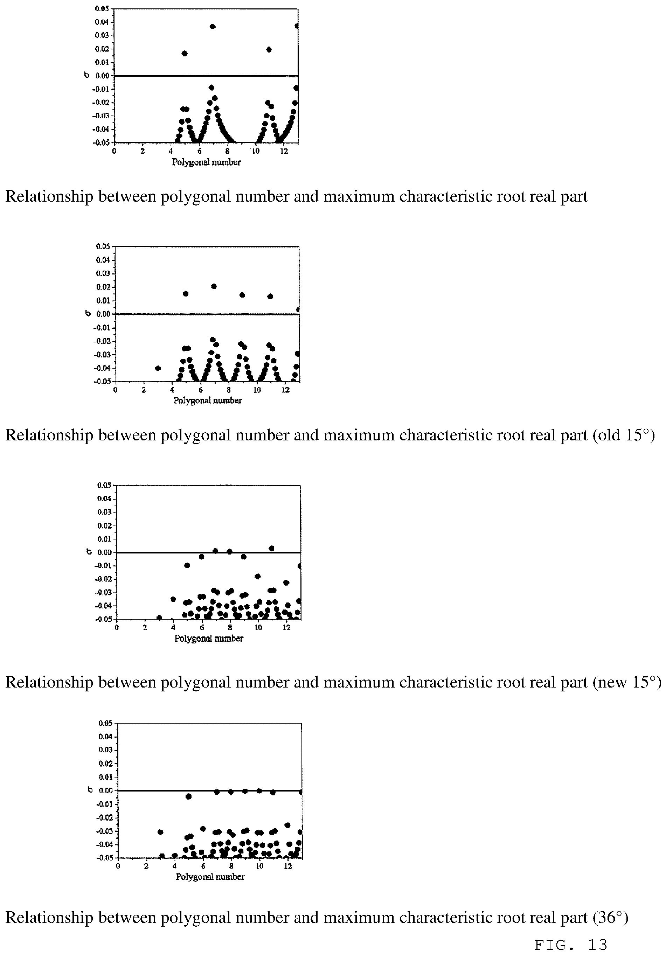

Fig. 13 also shows the relationship between the maximum characteristic root real part and the polygonal number.

The present invention is not limited to the description of each of the aspects or each of the embodiments. Various modifications are also included in the present invention as long as those skilled in the art can easily conceive them without departing from the recitation of the claims.

**Claims**

1. A hole drilling tool for forming holes, comprising a plurality of cutting edges, wherein

   when each of the cutting edges is applied to an equation of motion of the Matsuzaki-Ryu model, an integer value closest to an imaginary part of a quasi-static characteristic root s, which is a characteristic root at a frequency $\omega = 0$, is set to $N_0$, and
   when a maximum real part of the quasi-static characteristic root s which satisfies $3 \leq N_0 \leq 2n + 1$ (n is the number of the cutting edges) is a maximum real part $\sigma_{MAX}$,
   a maximum real part $T\sigma_{MAX}$ of the hole drilling tool is within a predetermined threshold value with respect to a maximum real part $R\sigma_{MAX}$ of a reference hole drilling tool.

2. A hole drilling tool,

   wherein, in the equation of motion, the quasi-static characteristic root corresponds to 2-sided to 13-sided polygons,
   wherein the reference hole drilling tool has the cutting edges arranged at equal pitches, and
   wherein an absolute value of a difference between the maximum real part $T\sigma_{MAX}$ of the target hole drilling tool and the maximum real part $R\sigma_{MAX}$ of the reference hole drilling tool is 0.075 or more, provided that $T\sigma_{MAX} \leq R\sigma_{MAX}$.

3. The hole drilling tool according to claim 2, wherein the absolute value of the difference is 0.10 or more.

4. The hole drilling tool according to claim 2, wherein the absolute value of the difference is 0.125 or more.

5. The hole drilling tool according to claims 2 to 4, wherein the number n of the cutting edges is 6.

6. The drilling tool according to claims 2 to 5,
   wherein a magnitude relationship of a division angle $\alpha i$ between the cutting edge i and the cutting edge i + 1 adjacent to it in an opposite rotating direction when viewed over the entire circumference of the hole drilling tool, and a magnitude relationship of a margin width tmi or land width ti of the edge i when viewed in the entire circumferential direction of the hole drilling tool coincide with each other.

7. The drilling tool according to claim 6,
   wherein a ratio ($\alpha 1:\alpha 2:$ ...... : $\alpha n$) between the division angles $\alpha i$ when the division angles are viewed over the entire circumference of the hole drilling tool, and a ratio (tm1:tm2:......: tmn) between the margin widths when the margin widths are viewed over the entire circumference of the hole drilling tool or a ratio(t1:t2:......: tn) of a land width when the land width is viewed over the entire circumference of the hole drilling tool coincide with each other.

8. The drilling tool according to claim 6 or 7, wherein a margin portion of each of the cutting edges is covered with a hard fil.

9. The drilling tool according to any one of claims 1 to 8, wherein the hole drilling tool is used in a reaming process.

10. A design method for a hole drilling tool for forming holes, the hole drilling tool comprising a plurality of cutting edges, the method comprising:

    applying the plurality of cutting edges each having an angle arbitrarily selected as that of a target drilling tool to a characteristic equation of the Matsuzaki-Ryu model, to specify, an integer value No closest to an imaginary part of a quasi-static characteristic root s, which is a characteristic root at a frequency $\omega = 0$;
    specifying a maximum real part $\sigma_{MAX}$ which is a maximum real part of the quasi-static characteristic root s which satisfies $3 \leq N_0 \leq 2n + 1$ (n is the number of the cutting edges); and
    selecting the target drilling tool in which its maximum real part $T\sigma_{MAX}$ is within a predetermined threshold value with respect to a maximum real part $R\sigma_{MAX}$ of a reference hole drilling tool.

11. The design method according to claim 10,

wherein, in the characteristic equation, the quasi-static characteristic root corresponds to 2-sided to 13-sided polygons,
wherein the reference hole drilling tool has the cutting edges arranged at equal pitches, and
wherein an absolute value of a difference between the maximum real part $T\sigma_{MAX}$ of the target hole drilling tool and the maximum real part $R\sigma_{MAX}$ of the reference hole drilling tool is 0.075, 0.10 or 0.125 or more, provided that $T\sigma_{MAX} \leq R\sigma_{MAX}$ .

12. A hole drilling tool manufacture method for manufacturing a hole drilling tool based on design obtained by the design method according to claim 10 or 11.

13. [Amended] An evaluation method for a hole drilling tool for forming holes, the hole drilling tool comprising a plurality of cutting edges,
the method comprising:

applying the plurality of cutting edges of a drilling tool to be evaluated to a characteristic equation of the Matsuzaki-Ryu model, to specify, an integer value N0 closest to an imaginary part of a quasi-static characteristic root s, which is a characteristic root at a frequency $\omega$ = 0;
specifying a maximum real part $\sigma_{MAX}$ which is a maximum real part of the quasi-static characteristic root s which satisfies $3 \leq N_0 \leq 2n + 1$ (n is the number of the cutting edges); and
determining, as a good product, the target drilling tool in which its maximum real part $T\sigma_{MAX}$ is within a predetermined threshold value with respect to a maximum real part $R\sigma_{MAX}$ of a reference hole drilling tool.

14. The evaluation method according to claim 13,

wherein, in the characteristic equation, the quasi-static characteristic root corresponds to 2-sided to 13-sided polygons,
wherein the reference hole drilling tool has the cutting edges arranged at equal pitches, and
wherein an absolute value of a difference between the maximum real part $T\sigma_{MAX}$ of the target hole drilling tool and the maximum real part $R\sigma_{MAX}$ of the reference hole drilling tool is 0.075, 0.10 or 0.125 or more, provided that $T\sigma_{MAX} \leq R\sigma_{MAX}$ .

15. An evaluation method for a hole drilling tool for forming holes, the hole drilling tool comprising a plurality of cutting edges,
the method comprising:

applying the plurality of cutting edges of a drilling tool to be evaluated to a characteristic equation of the Matsuzaki-Ryu model, to specify, an integer value N0 closest to an imaginary part of a quasi-static characteristic root s, which is a characteristic root at a frequency $\omega$ = 0; and
specifying a maximum real part $\sigma_{MAX}$ which is a maximum real part of the quasi-static characteristic root s which satisfies $3 \leq N_0 \leq 2n + 1$ (n is the number of the cutting edges).

16. A reamer with six cutting edges, wherein arrangement angles of the cutting edges are 35 to 45 degrees, 75 to 85 degrees, 55 to 65 degrees, 50 to 60 degrees, 30 to 40 degrees, and 85 to 95 degrees in order.

17. A reamer with six cutting edges, wherein arrangement angles of the cutting edges are 45 to 55 degrees, 25 to 35 degrees, 95 to 105 degrees, 65 to 75 degrees, and 35 to 45 degrees in order.

FIG. 1

FIG. 2

FIG. 3

FIG. 4

(a) 2-sided polygon

(b) 3-sided polygon

(c) 4-sided polygon

(d) 5-sided polygon

(e) 6-sided polygon

(f) 7-sided polygon

(g) 8-sided polygon

(h) 9-sided polygon

(i) 10-sided polygon

(j) 11-sided polygon

(k) 12-sided polygon

(l) 13-sided polygon

EP 3 875 200 A1

FIG. 5

(a) 2-sided polygon

(b) 3-sided polygon

(c) 4-sided polygon

(d) 5-sided polygon

(e) 6-sided polygon

(f) 7-sided polygon

(g) 8-sided polygon

(h) 9-sided polygon

(i) 10-sided polygon

(j) 11-sided polygon

(k) 12-sided polygon

(l) 13-sided polygon

FIG. 6

Continuation of [Fig. 6]

New 15　(75,45,60,45,60,75)

36°　(66,36,78,87,44,49)

Continuation of [Fig. 6]

Continuation of [Fig. 6]

36  +5° (2) (61,41,78,87,44,49)

36  +5° (1) (61,41,78,87,44,49)

FIG. 7

Continuation of [Fig. 7]

Continuation of [Fig. 7]

N=3-18,min30 rank5 (70,40,70,30,100,50)

N=3-18,min30 rank1 (50,30,100,70,70,40)

FIG. 8

FIG. 9

FIG. 10

Land width $t$ (2071)

Margin width $t_m$ (2072)

Radius of groove bottom roundness $r$ (2069)

Groove bottom diameter $d_c$ (2070)

Groove depth $h$ (2068)

FIG. 11

Comparison between σ maximum value (σ$_{max}$) and mean roundness

Relationship between rotating speed and characteristic root real part (equal pitch)

Relationship between rotating speed and characteristic root real part (old 15°)

Relationship between rotating speed and characteristic root real part (new 15°)

Relationship between rotating speed and characteristic root real part (36°)

FIG. 12

Relationship between polygonal number and maximum characteristic root real part

Relationship between polygonal number and maximum characteristic root real part (old 15°)

Relationship between polygonal number and maximum characteristic root real part (new 15°)

Relationship between polygonal number and maximum characteristic root real part (36°)

FIG. 13

## INTERNATIONAL SEARCH REPORT

| | International application No. |
|---|---|
| | PCT/JP2019/041590 |

| A. CLASSIFICATION OF SUBJECT MATTER |
|---|
| B23D 77/00(2006.01)i |
| FI: B23D77/00 |
| |
| According to International Patent Classification (IPC) or to both national classification and IPC |

| B. FIELDS SEARCHED |
|---|
| Minimum documentation searched (classification system followed by classification symbols) |
| B23D77/00 |

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
    WPI

| C. DOCUMENTS CONSIDERED TO BE RELEVANT | | |
|---|---|---|
| Category* | Citation of document, with indication, where appropriate, of the relevant passages | Relevant to claim No. |
| A | 松綺健一郎他４名，　リーマ加工における加工穴多角形化現象に関する基礎的研究，日本機械学会論文集，09 August 2017, vol. 83(2017), no. 852, Paper ID:17-00155, pp. 1-13, ISSN-L:2187-9761, DOI: 10.1299/transjsme.17-00155, pp. 1-13, (MATSUZAKI, Kenichiro et al., "Study for polygonal deformation phenomenon of borehole in reaming process", Transactions of the JSME) | 1-17 |
| A | JP 2014-079814 A (MITSUBISHI MATERIALS CORP.) 08.05.2014 (2014-05-08) fig. 2, paragraphs [0027]-[0033], [0042] | 1-17 |

| ☒   Further documents are listed in the continuation of Box C. | ☒   See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 15 January 2020 (15.01.2020) | 28 January 2020 (28.01.2020) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

| International application No. |
|---|
| PCT/JP2019/041590 |

C (Continuation).   DOCUMENTS CONSIDERED TO BE RELEVANT

| Category* | Citation of document, with indication, where appropriate, of the relevant passages | Relevant to claim No. |
|---|---|---|
| A | CD-ROM of the specification and drawings annexed to the request of Japanese Utility Model Application No. 79725/1992 (Laid-open No. 34907/1994) (NIKKEN KOSAKUSHO WORKS LTD.) 26 April 1994 (1994-04-26) fig. 2-4, paragraphs [0010], [0018]-[0023] | 1-17 |
| A | CN 108655500 A (UNIV SHANGHAI) 16.10.2018 (2018-10-16) fig. 2, paragraph [0020] | 1-17 |

Form PCT/ISA/210 (continuation of second sheet) (January 2015)

**INTERNATIONAL SEARCH REPORT**
Information on patent family members

International application No.

PCT/JP2019/041590

| Patent Documents referred in the Report | Publication Date | Patent Family | Publication Date |
|---|---|---|---|
| JP 2014-079814 A | 08 May 2014 | (Family: none) | |
| JP 06-31919 U1 | 26 Apr. 1994 | (Family: none) | |
| CN 108655500 A | 16 Oct. 2018 | (Family: none) | |

Form PCT/ISA/210 (patent family annex) (January 2015)

## REFERENCES CITED IN THE DESCRIPTION

### Non-patent literature cited in the description

- Study for polygonal deformation phenomenon of borehole in reaming process. *Bulletin of the Japan Society of Mechanical Engineers,* 2017, vol. 83 (852